# EUROPEAN PATENT SPECIFICATION

(11) **EP 4 321 237 B1**
(45) Date of publication and mention of the grant of the patent: **05.11.2025**
(21) Application number: 23186492.7
(22) Date of filing: 19.07.2023
(51) Int. Cl.: B01D 53/22, B01D 63/02, C10L 3/06, C10L 3/10

(54) **METHOD FOR THE SEPARATION OF A NON-CONDENSABLE GAS**
VERFAHREN ZUR TRENNUNG EINES NICHTKONDENSIERBAREN GASES
PROCÉDÉ DE SÉPARATION D'UN GAZ NON CONDENSABLE

(30) Priority: 10.08.2022 NL 2032722
(43) Date of publication of application: 14.02.2024
(73) Proprietor: Host Holding B.V., 7521 PS Enschede (NL)
(72) Inventor: BOS, Martin Johan, 7521 PS Enschede (NL); STEGEMAN, Thijs Hendrikus Gerardus, 7521 PS Enschede (NL); KLEIN TEESELINK, Hermanus, 7521 PS Enschede (NL)
(74) Representative: Patentwerk B.V.

(56) References cited:
- EP-A2- 3 254 038
- WO-A1-2021/257381
- WO-A1-2022/012944
- US-A1- 2013 058 853

## Description

The invention relates to a method for the separation of a non-condensable gas.

For the production of biomethane, or renewable natural gas, out of biogas a number of different technologies are available. Because of the difference in separation performance of these technologies the composition of the tail gas, which typically consists mainly of carbon dioxide (CO₂), show great variation. Currently the best available technology for the production of biomethane is three-stage membrane separation. Typically this leads to a tail gas that consists of >99% CO₂ and <1% CH₄. Other technologies like two-stage membrane separation or pressure swing adsorption (PSA) have a lower separation efficiency, leading to for example up to 10% of methane (CH₄) in the tail gas. The methane is valuable wherefore recovery thereof is desired and it being undesired to vent tail gases with such relatively high percentage of methane to the atmosphere. The latter would also be undesired from environmentally point of view.

The CO₂ rich tail gas is typically subjected to CO₂ liquefaction wherein the CO₂ stream is liquefied to reach the conditions for temporary storage or transport. In this process, the CO₂ stream is subjected to a series of compression stages and cooling, such that the CO₂ stream is compressed to the desired liquefaction pressure and water is removed by condensation and desiccation to prevent ice formation. An impurity removal unit can be used to remove other impurities when the delivered CO₂ needs to meet a high purity requirement. A refrigeration cycle can be applied in order to condense the CO2 stream. When operating a CO₂ Liquefaction installation a stream of non-condensable gas components is stripped out of the system to produce pure liquid CO₂. Stripping out gas components in a stripping column works on the basis of difference in volatility of the individual gas components. This non-condensable gas stream typically has traces of carbon dioxide, nitrogen, oxygen and methane. The non-condensable gas stream is typically released from the top of a condenser. In the reboiler, pure liquefied CO₂ is collected with a purity of >99,997 CO₂ %.

Behind three-stage biogas membrane upgrading systems the typical CO₂ feed stream to a CO₂ liquefier mainly consists out of CO₂ >99% . Typically a substantial fraction of the CO₂ feed flow is seen as non-condensable gas. Venting of the non-condensable gas stream is often required, but for short time periods only. Lowering the CO₂ feed quality to the inlet of the CO₂ liquefier, i.e. more methane, nitrogen or oxygen, result in higher flow of non-condensable gasses. The non-condensable gas composition is independent of the CO₂ feed quality to the CO₂ liquefier and depends on the overall operating conditions of the stripping column.

Behind two-stage biogas membrane upgrading systems the amount of CH₄ slip is more significant compared to the three-stage membrane system. For a two-stage system CO₂ streams at 90% are not uncommon. Since the CO₂ liquefaction system improves the methane content from about 10% to roughly 20%, resulting to about 50% of the feed flow being present in the non-condensable gas stream. An additional process step is desired to improve the efficiency of gas component separation.

Methods according to the prior art are described in US 2013/058853 A1 which discloses a method for separating a non-condensable gas comprising the CO₂ recovery of an off-gas stream from the combustion of natural gas and WO 2022/012944 A1 which also discloses a method for separating non-condensable gas via membrane separation.

Hence, it is a goal to provide a method for the separation of a non-condensable gas, in particular which originates from a biomethane production process.

The invention provides thereto a method for the separation of a non-condensable gas, comprising the steps of:
- providing a process stream comprising at least one non-condensable gas, wherein the non-condensable gas comprises at least carbon dioxide and methane, in particular at least 60 wt% carbon dioxide and at least 5 wt% methane, and wherein the process stream is at a pressure, in particular an overpressure, of at least 10 barg and has a temperature of -20 degrees Celsius or lower;
- reducing the pressure of the process stream with at least 1 barg;
- heating of the process stream to a temperature of at least 15 degrees Celsius;
- optionally releasing at least part of the process stream in particular to the atmosphere; and
- subjecting at least part of the process stream to membrane separation to provide a methane rich retentate stream and a carbon dioxide rich permeate stream, wherein the process stream is at a pressure of at least 3 barg when subjected to the membrane separation and wherein the retentate side of the membrane is at a pressure of at least 3 barg and wherein there is a pressure loss at the permeate side of the membrane.

The method according to the invention enables the separation of a non-condensable gas in an efficient and effective manner. The method enables the use of a tail gas (process stream), or non-condensable waste stream, originating from a biogas upgrader and/or a production process of biomethane, such that at least part of the remaining methane (and/or carbon dioxide) can still be recovered. Without applying the method according to the present invention, the recycle stream (thus the process stream of the present invention) would have a relatively large volume whilst containing a relatively low usable percentage of methane. This would negatively affect the overall biogas upgrading process. Hence, a tail gas, in particular comprising at least 5 wt% methane, would be rather inefficient to recycle. The relatively simple method according to the invention provides an effective way to purify the non-condensable gas in a practical but non-conventional manner. The method according to the invention is performed at pressures above 3 barg, preferably above 5 barg. The process stream is at a pressure of at least 3 barg when subjected to the membrane separation. It was experimentally found that the process stream having a pressure of 3 barg or higher when subjected to membrane separation results in a good methane selectivity. The method according to the invention could also be performed at relatively high pressure, for example of above 10 barg, such that the methane is efficiently separated from the process stream. The membrane separation of the non-condensable gas is achieved via the pressure difference over the membrane.

Tail gases can have a relatively low quality and/or for example a relatively high fraction of valuable products. The presence of a relatively high fraction of a specific component, such as methane and/or carbon dioxide, could result in that further processing of the process stream, such as liquefaction of the carbon dioxide, is rather difficult and/or inefficient. For example the rest stream of a liquefaction process of a low quality tail gas could comprise a relatively high fraction of non-condensable gases whereof it would be undesired to vent this to the atmosphere. Such process stream comprising a relatively high fraction of at least one non-condensable gas could be efficiently separated by making use of the method according to the present invention. In case for example the tail gas of the biogas upgrader would be unsuitable to recycle or to process further, tail gasses are often vented to the atmosphere. However, this could be harmful for the environment, depending on the composition of the tail gas. Hence, a benefit of the separation of at least methane from the non-condensable gas is that it can be prevented that substantial amounts of methane are vented to the atmosphere. The same applies for carbon dioxide.

It is optional that at least part of the process stream is released to the atmosphere. This could be done after the heating step and prior to part of the process stream is subjected to membrane separation. The venting step could for example be applied to lower the pressure of the process stream. The heating step could for example be performed by making use of an electrical gas immersion heater device. Adjusting the temperature varies the diffusivity coefficients of the individual gas components of the non-condensable gas and thus the separation capacity. Due to the absence of moisture, lower operating temperature in the membrane module(s) can be used compared to biogas membrane upgrading systems. The use of a relatively low operating temperature could also result in a higher selectivity and a lower power requirement in the heater, if applied. The method preferably makes use of at least one, and preferably multiple membrane modules, wherein each membrane module and/or membrane is configured for the separation of at least methane and carbon dioxide. The at least one membrane can be a gas separation membranes configured for selective permeation. The driving force for permeation of the gas through the membrane is the difference between the partial pressures of the gas on the retentate side and the permeate side. The greater this difference, the higher the proportion of the (carbon dioxide) gas that permeates the membrane.

The method according to the invention could also be referred to as a method for separation of methane and/or carbon dioxide from a non-condensable gas or as a method for the purification of a non-condensable gas. The method steps are typically subsequent steps. The process steam is in particular a gaseous stream.

The process stream preferably originates (directly or indirectly) from a biogas upgrader and/or the process stream originates from production process of biomethane. The process stream could also originate form a carbon dioxide liquefaction process and/or a carbon dioxide liquefier. It is conceivable that the process stream comprises tail gas from a biogas upgrader, a production process of biomethane and/or from a carbon dioxide liquefaction process. In this way, the method according to the invention could be applied as additional processing step to (part of a) a conventional biogas system. The process stream could for example originate from a two-stage membrane system or a three-stage membrane system. The method according to the invention is in particular suitable for use after a biogas upgrader process using a two-stage membrane system. Typically, such systems produce a non-condensable gas which comprises a relatively high methane content. Since the method according to the invention is suitable for efficient recovery of methane from a non-condensable gas, the method provides valuable further process steps for the overall biogas upgrading process.

The non-condensable gas could further comprise for example nitrogen and/or oxygen. A non-limiting example of a process stream which is suitable to apply in a method according to the present invention is non-condensable gas comprising approximately 77.3 wt% carbon dioxide, 21.2 wt% methane, 0.4 wt% nitrogen, 1.1 wt% oxygen and 0.0 wt% water vapour. It is conceivable that the process stream comprises a non-condensable gas comprising a range of 60 to 95 wt% carbon dioxide, 5 to 25 wt% methane, 0.1 to 1.0 wt% nitrogen, 0.5 to 2.0 wt% oxygen and 0.0 to 0.1 wt% water vapour. Preferably, the process stream comprises at least 75 wt% carbon dioxide, preferably at least 80 wt% carbon dioxide, more preferably at least 85 wt% carbon dioxide. However, it is also conceivable that the process stream comprises at least 90 wt% carbon dioxide or at least 95 wt% carbon dioxide. Possibly, the process stream comprises at most 90 wt% carbon dioxide or at most 95 wt% carbon dioxide. Typically, the process stream comprises at least 5 wt% methane, preferably at least 7.5 wt% methane, more preferably at least 10 wt% methane. It is also conceivable that the process stream comprises at most 20 wt% methane, preferably at most 15 wt% methane, more preferably at most 10 wt% methane. In a preferred embodiment, the process stream comprises in the range of 85 to 95 wt% of carbon dioxide and/or the process stream comprises in the range of 5 to 15 wt% of methane. It was experimentally found that the method according to the invention is in particular suitable to apply in combination with a process stream according to any of the mentioned examples. It is in particular beneficial to apply the method in case there is a substantial amount of methane which is suitable for both recovery.

Preferably, the process stream as provided is at a pressure of at least 14 barg, preferably at least 16 barg, more preferably at least 18 barg. It is also conceivable that the process stream as provided is at a pressure of at most 22 barg, preferably at most 20 barg. The process stream is in particular at an overpressure. These pressures are typically pressures applied in the primary biogas upgrading process, for example in a liquefaction process, which process can be on the basis of the method according to the invention. Hence, the pressure of the process stream could substantially equal the pressure of the tail gas originating from a biogas upgrader (process).

The pressure of the process stream is preferably reduced at at least one method step, and preferably at multiple method steps or even at each method step. In a preferred embodiment, the pressure of the process stream is reduced with at least 1.0 barg before the heating step. It is also conceivable that the pressure of the process stream is reduced with at least 1.5 or at least 2.0 barg before the heating step (in particular wherein the process stream is heated to a temperature of at least 10 degrees Celsius). Possibly, the pressure of the process stream is reduced with at least 4.0 barg, at least 5.0 barg or at least 6.0 barg before the heating step. It is also conceivable that the pressure of the process stream is at least reduced with a factor 2 before the heating step and/or prior to the membrane separation. t Alternatively, it is conceivable that the pressure of the process stream is maintained substantially constant during the method steps.

The process stream can be for example be heated to a temperature of at least 15 degrees Celsius, preferably at least 17.5 degrees Celsius, more preferably at least 20 degrees Celsius, during the heating step. Preferably, the process stream is heated to a temperature of at most 30 degrees Celsius. It is conceivable that the process stream is heated to a temperature in the range of 18 to 22 degrees Celsius. For gasses, there is a direct relation between pressure and temperature wherefore the temperature is preferably determined based upon the applied pressure and the characteristics of the gas.

The process stream as provided can for example have a temperature of -25 degrees Celsius or lower, preferably -30 degrees Celsius or lower. It is also conceivable that the process stream has a temperature of at most -30 degrees Celsius or at most -35 degrees Celsius. It is for example conceivable that the process stream has process conditions which are in line with the process conditions, and in particular the condenser process conditions, of the biogas upgrader process, in particular a carbon dioxide liquefier, where the process stream originates from.

The process stream can for example be at a pressure of at least 3 barg, preferably at least 5 barg, more preferably at least 8 barg when subjected to the membrane separation. It is also conceivable that the process stream is at a pressure of at most 12 barg, preferably at most 13 barg, more preferably at most 14 barg when subjected to the membrane separation. The pressure of the process stream prior to the membrane separation is preferably substantially equal to or at least 1 barg lower than the pressure as adjusted prior to the heating step. Alternatively, the process stream can for example be at a pressure of at least 10 barg, preferably at least 12 barg, more preferably at least 14 barg when subjected to the membrane separation. It is also conceivable that the process stream is at a pressure of at most 18 barg, preferably at most 16 barg, more preferably at most 14 barg when subjected to the membrane separation. The pressure at the permeate side of the membrane has to be lower than the pressure at the retentate side of the membrane. The permeate side of the membrane can for example be at atmospheric pressure.

The method could further comprise the step of releasing at least part of the carbon dioxide rich permeate stream to the atmosphere. Since this stream will typically have a relatively low fraction of methane, the stream could be vented safely to the atmosphere. Alternatively, the carbon dioxide rich permeate stream could be applied for further processing.

The method according to the invention can be applied in combination with a system for the separation of a non-condensable gas, the system comprising at least one heater for heating at least part of a process stream, at least one membrane module comprising at least one gas separation membrane configured for carbon dioxide permeation, preferably at least one valve for feeding of at least part of the process stream to at least one membrane module in a controlled manner and at least one control unit configured to control the temperature and/or pressure in the process stream.

The system could also be referred to as a system for non-condensable gas purification. The system could comprise at least one pump for displacing the process stream. The system could for example comprise at least one vacuum pump, possibly positioned on the permeate side of the membrane.

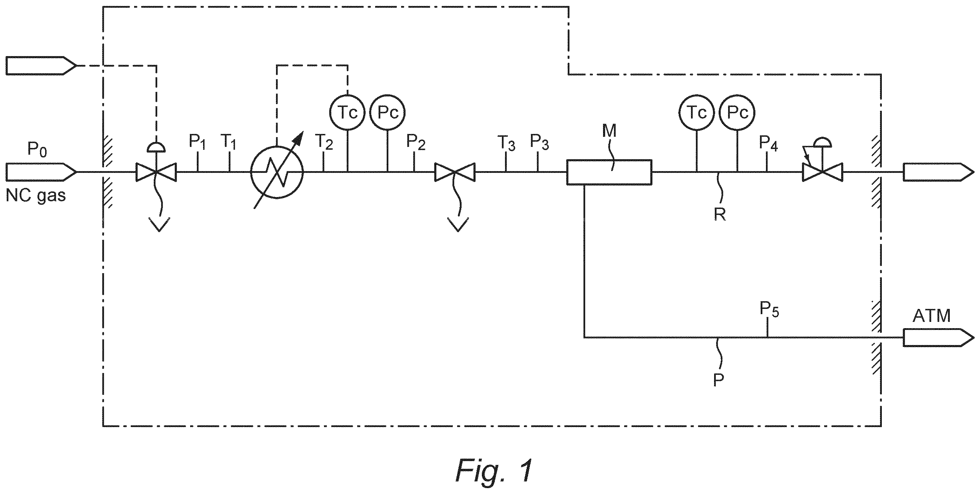

The invention will be further elucidated by means of non-limiting exemplary embodiments illustrated in figure 1 which shows a schematic representation of the method according to the present invention.

Figure 1 shows a schematic representation of a possible embodiment of the method step according to the present invention, which can be applied in combination with a system for the separation of non-condensable gas. The method is configured for the separation of a non-condensable gas (NC gas). In the shown embodiment, the process stream comprises a non-condensable gas which originated from a biomethane production process. The NC gas than has a pressure P0, which is for example 18 barg. The NC has is brought to the system according to the present invention and released into this purification system using a valve, in particular a pneumatic control valve (V), because constant condenser pressure is desired. Said valve V will regulate the supply of the process stream and/or the pressure in the process stream. The process stream is then reduced to a pressure P1, which is preferably at least 3 barg. P1 is at least 1 barg lower than P0.

Preferably, P1 is substantially lower than P0. The process stream has a temperature T1 of -20 degrees Celsius or lower. Subsequently, after the pressure reduction, the process stream is heated to a temperature T2 of at least (10 degrees Celsius) by means of a temperature control unit Tc. The heating step is for example performed by means of an electrical gas immersion heater device. A pressure control unit could optionally optionally be applied too. The pressure of the process stream P2 typically substantially equals P1. It is also conceivable that P2 is lower than P1, for example at least 0.5 barg lower. Adjusting the temperature, varies the diffusivity coefficients of the individual gas components and thus separation capacity. The process stream is then supplied to at least one membrane module M for a membrane separation step. Optionally, at least part of the process stream could be released (directly or indirectly) to the atmosphere. The membrane module M has a retentate side R and a permeate side P. The retentate comprises a process stream which is methane rich and/or purified and which can for example be brought back to the initial biogas upgrader. The permeate side P can for example be vented to the atmosphere ATM to release carbon dioxide, nitrogen, oxygen and/or methane, though the methane emissions would be less significant than without the use of a method according to the present invention. The retentate flow quality is preferably controlled with a back pressure regulator which basically controls the pressure difference between retentate and permeate side. The higher differential pressure achieved the faster carbon dioxide diffuses through the membrane porous walls. Optionally, the carbon dioxide rich permeate stream can be recycled to the compressor suction of the liquefaction system. The process stream is preferably at a pressure P3 of at least 3 barg when subjected to the membrane separation. The temperature T3 preferably substantially equals T2. It is also conceivable that T3 is at least 1 degree lower than T2. The retentate side of the membrane is at a pressure P4 of at least 3 barg. P4 is for example 0.5 barg lower than P3. The pressure over the membrane M could be controlled by a valve, in particular a pneumatic control valve. Subsequently, the pressure in the retentate side could be reduced, for example to atmospheric pressure. There is a pressure loss at the permeate side of the membrane, where the pressure P5 on the permeate side preferably is at atmospheric pressure. It is also possible that the pressure P5 at the permeate side is at sub atmospheric pressure. The interrupted lines substantially indicate the basic framework of the invention.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Method for the separation of a non-condensable gas, comprising the steps of:
- providing a process stream comprising a non-condensable gas, wherein the non-condensable gas comprises at least 60 wt% carbon dioxide and at least 5 wt% methane, and wherein the process stream is at a pressure of at least 10 barg and has a temperature of -20 degrees Celsius or lower;
- reducing the pressure of the process stream with at least 1 barg;
- heating of the process stream to a temperature of at least 15 degrees Celsius; and
- subjecting at least part of the process stream to membrane separation to provide a methane rich retentate stream and a carbon dioxide rich permeate stream, wherein the process stream is at a pressure of at least 3 barg when subjected to the membrane separation and wherein the retentate side of the membrane is at a pressure of at least 3 barg and wherein there is a pressure loss at the permeate side of the membrane.

2. Method according to claim 1, wherein the process stream originates from a biogas upgrader.

3. Method according to claim 1 or claim 2, wherein the process stream comprises at least 80 wt% carbon dioxide, preferably at least 85 wt% carbon dioxide, more preferably at least 90 wt% carbon dioxide.

4. Method according to claim 1 or claim 2, wherein the process stream comprises at least 5 wt% methane, preferably at least 7.5 wt% methane, more preferably at least 10 wt% methane.

5. Method according to any of the previous claims, wherein the process stream comprises at most 20 wt% methane, preferably at most 15 wt% methane, more preferably at most 10 wt% methane.

6. Method according to any of the previous claims, wherein the process stream comprises in the range of 85 to 95 wt% of carbon dioxide and/or wherein the process stream comprises in the range of 5 to 15 wt% of methane.

7. Method according to any of the previous claims, wherein the process stream as provided is at a pressure of at least 14 barg, preferably at least 16 barg, more preferably at least 18 barg.

8. Method according to any of the previous claims, wherein the pressure of the process stream is reduced with at least 2 barg prior to the heating step, preferably with at least 4 barg.

9. Method according to any of the previous claims, wherein the process stream is heated to a temperature of at least 15 degrees Celsius, preferably at least 17.5 degrees Celsius, more preferably at least 20 degrees Celsius, during the heating step.

10. Method according to any of the previous claims, wherein the process stream as provided has a temperature of - 25 degrees Celsius or lower, preferably -30 degrees Celsius or lower.

11. Method according to any of the previous claims, wherein the process stream is at a pressure of at least 3 barg, preferably at least 5 barg, more preferably at least 8 barg when subjected to the membrane separation.

12. Method according to any of the previous claims, wherein the permeate side of the membrane is at atmospheric pressure.

13. Method according to any of the previous claims, comprising the step of releasing at least part of the carbon dioxide rich permeate stream to the atmosphere.

## Patentansprüche

1. Verfahren zur Abtrennung eines nicht kondensierbaren Gases, umfassend die folgenden Schritte:
- Bereitstellen eines Prozessstroms, umfassend ein nicht kondensierbares Gas, wobei das nicht kondensierbare Gas mindestens 60 Gewichts-% Kohlendioxid und mindestens 5 Gewichts-% Methan umfasst und wobei der Prozessstrom einen Druck von mindestens 10 barg aufweist und eine Temperatur von -20 Grad Celsius oder weniger aufweist;
- Reduzieren des Drucks des Prozessstroms um mindestens 1 barg;
- Erwärmen des Prozessstroms auf eine Temperatur von mindestens 15 Grad Celsius; und
- Unterziehen mindestens eines Teils des Prozessstroms einer Membrantrennung, um einen methanreichen Retentatstrom und einen kohlendioxidreichen Permeatstrom bereitzustellen, wobei der Prozessstrom auf einem Druck von mindestens 3 barg ist, wenn er der Membrantrennung unterzogen wird, und wobei die Retentatseite der Membran auf einem Druck von mindestens 3 barg ist und wobei ein Druckverlust an der Permeatseite der Membran vorliegt.

2. Verfahren nach Anspruch 1, wobei der Prozessstrom aus einem Biogasaufbereiter stammt.

3. Verfahren nach Anspruch 1 oder Anspruch 2, wobei der Prozessstrom mindestens 80 Gewichts-% Kohlendioxid, vorzugsweise mindestens 85 Gewichts-% Kohlendioxid, bevorzugter mindestens 90 Gewichts-% Kohlendioxid umfasst.

4. Verfahren nach Anspruch 1 oder Anspruch 2, wobei der Prozessstrom mindestens 5 Gewichts-% Methan, vorzugsweise mindestens 7,5 Gewichts-% Methan, bevorzugter mindestens 10 Gewichts-% Methan umfasst.

5. Verfahren nach einem der vorherigen Ansprüche, wobei der Prozessstrom höchstens 20 Gewichts-% Methan, vorzugsweise höchstens 15 Gewichts-% Methan, bevorzugter höchstens 10 Gewichts-% Methan umfasst.

6. Verfahren nach einem der vorherigen Ansprüche, wobei der Prozessstrom in dem Bereich von 85 bis 95 Gewichts-% Kohlendioxid umfasst und/oder wobei der Prozessstrom in dem Bereich von 5 bis 15 Gewichts-% Methan umfasst.

7. Verfahren nach einem der vorherigen Ansprüche, wobei der bereitgestellte Prozessstrom bei einem Druck von mindestens 14 barg, vorzugsweise mindestens 16 barg, bevorzugter mindestens 18 barg ist.

8. Verfahren nach einem der vorherigen Ansprüche, wobei der Druck des Prozessstroms vor dem Erwärmungsschritt um mindestens 2 barg, vorzugsweise um mindestens 4 barg, reduziert wird.

9. Verfahren nach einem der vorherigen Ansprüche, wobei der Prozessstrom während des Erwärmungsschritts auf eine Temperatur von mindestens 15 Grad Celsius, vorzugsweise mindestens 17,5 Grad Celsius, bevorzugter mindestens 20 Grad Celsius, erwärmt wird.

10. Verfahren nach einem der vorherigen Ansprüche, wobei der bereitgestellte Prozessstrom eine Temperatur von - 25 Grad Celsius oder weniger, vorzugsweise - 30 Grad Celsius oder weniger, aufweist.

11. Verfahren nach einem der vorherigen Ansprüche, wobei der Prozessstrom unter einem Druck von mindestens 3 barg, vorzugsweise mindestens 5 barg, bevorzugter mindestens 8 barg steht, wenn er der Membrantrennung unterzogen wird.

12. Verfahren nach einem der vorherigen Ansprüche, wobei die Permeatseite der Membran auf Atmosphärendruck ist.

13. Verfahren nach einem der vorherigen Ansprüche, umfassend den Schritt eines Freisetzens von zumindest einem Teil des kohlendioxidreichen Permeatstroms in die Atmosphäre.

## Revendications

1. Procédé de séparation d'un gaz non condensable, comprenant les étapes consistant à :
- fournir un flux de traitement comprenant un gaz non condensable, dans lequel le gaz non condensable comprend au moins 60 % en poids de dioxyde de carbone et au moins 5 % en poids de méthane, et dans lequel le flux de traitement est à une pression d'au moins 10 barg et a une température de -20 degrés Celsius ou moins ;
- réduire la pression du flux de traitement avec au moins 1 barg ;
- chauffer le flux de traitement à une température d'au moins 15 degrés Celsius ; et
- soumettre au moins une partie du flux de traitement à une séparation par membrane pour fournir un flux de rétentat riche en méthane et un flux de perméat riche en dioxyde de carbone, dans lequel le flux de traitement est à une pression d'au moins 3 barg lorsqu'il est soumis à la séparation par membrane et dans lequel le côté rétentat de la membrane est à une pression d'au moins 3 barg et dans lequel il y a une perte de pression du côté perméat de la membrane.

2. Procédé selon la revendication 1, dans lequel le flux de traitement provient d'un valorisateur de biogaz.

3. Procédé selon la revendication 1 ou la revendication 2, dans lequel le flux de traitement comprend au moins 80 % en poids de dioxyde de carbone, de préférence au moins 85 % en poids de dioxyde de carbone, plus préférablement au moins 90 % en poids de dioxyde de carbone.

4. Procédé selon la revendication 1 ou la revendication 2, dans lequel le flux de traitement comprend au moins 5 % en poids de méthane, de préférence au moins 7,5 % en poids de méthane, plus préférablement au moins 10 % en poids de méthane.

5. Procédé selon l'une quelconque des revendications précédentes, dans lequel le flux de traitement comprend au plus 20 % en poids de méthane, de préférence au plus 15 % en poids de méthane, plus préférablement au plus 10 % en poids de méthane.

6. Procédé selon l'une quelconque des revendications précédentes, dans lequel le flux de traitement comprend entre 85 et 95 % en poids de dioxyde de carbone et/ou dans lequel le flux de traitement comprend entre 5 et 15 % en poids de méthane.

7. Procédé selon l'une quelconque des revendications précédentes, dans lequel le flux de traitement tel que fourni est à une pression d'au moins 14 barg, de préférence d'au moins 16 barg, plus préférablement d'au moins 18 barg.

8. Procédé selon l'une quelconque des revendications précédentes, dans lequel la pression du flux de traitement est réduite avec au moins 2 barg avant l'étape de chauffage, de préférence avec au moins 4 barg.

9. Procédé selon l'une quelconque des revendications précédentes, dans lequel le flux de traitement est chauffé à une température d'au moins 15 degrés Celsius, de préférence d'au moins 17,5 degrés Celsius, plus préférablement d'au moins 20 degrés Celsius, pendant l'étape de chauffage.

10. Procédé selon l'une quelconque des revendications précédentes, dans lequel le flux de traitement fourni a une température de -25 degrés Celsius ou moins, de préférence -30 degrés Celsius ou moins.

11. Procédé selon l'une quelconque des revendications précédentes, dans lequel le flux de traitement est à une pression d'au moins 3 barg, de préférence d'au moins 5 barg, plus préférablement d'au moins 8 barg lorsqu'il est soumis à la séparation par membrane.

12. Procédé selon l'une quelconque des revendications précédentes, dans lequel le côté perméat de la membrane est à la pression atmosphérique.

13. Procédé selon l'une quelconque des revendications précédentes, comprenant l'étape consistant à libérer dans l'atmosphère au moins une partie du flux de perméat riche en dioxyde de carbone.
